# FASCICULE DE BREVET EUROPEEN

(11) **EP 2 904 595 B1**
(45) Date de publication et mention de la délivrance du brevet: **28.08.2019**
(21) Numéro de dépôt: 13815011.5
(22) Date de dépôt: 11.09.2013
(51) Int. Cl.: G08B 13/26, G08B 21/04

(54) **CAPTEUR CAPACITIF POUR LA DETECTION DE PRESENCE D'UN OBJET ET/OU D'UN INDIVIDU**
KAPAZITIVER SENSOR ZUM DETEKTIEREN DER ANWESENHEIT EINES GEGENSTANDES UND/ODER EINES INDIVIDUUMS
CAPACITIVE SENSOR FOR DETECTING THE PRESENCE OF AN OBJECT AND/OR OF AN INDIVIDUAL

(30) Priorité: 05.10.2012 FR 1259492
(43) Date de publication de la demande: 12.08.2015
(73) Titulaire: BOSTIK SA, 93210 La Plaine Saint Denis (FR)
(72) Inventeur: CASIMIRO, Jessie, F-77170 Brie Comte Robert (FR); MABIRE, Philippe, F-91080 Courcouronnes (FR); HOLE, Stéphane, F-75013 Paris (FR); LUCAS, Jérôme, F-91300 Massy (FR); MARGO, Cédric, F-91400 Orsay (FR); GERMAIN, Stéphane, F-77170 Brie Comte Robert (FR)
(74) Mandataire: Cabinet Plasseraud
(86) Numéro de dépôt international: PCT/FR2013/052086
(87) Numéro de publication internationale: WO 2014/053719

(56) Documents cités:
- EP-A1- 0 518 836
- EP-A2- 2 284 999
- WO-A2-2004/053524
- US-B1- 6 456 198

## Description

### Domaine technique

La présente invention se situe dans le domaine de la détection de présence d'objet et/ou d'individu.

Un des objectifs de la présente invention est d'instrumenter un sol avec un ou plusieurs capteurs capacitifs aptes à détecter la présence ou non d'un objet et/ou d'un individu.

L'objet de la présente invention trouve ainsi une application avantageuse pour détecter la chute d'une personne âgée dans une pièce dont le sol est instrumenté avec un ou plusieurs capteurs capacitifs : la présente invention est donc particulièrement intéressante pour les bâtiments, médicalisés ou non, dédiés aux personnes âgées tels que par exemple les maisons de retraite.

Bien évidemment, d'autres applications avantageuses peuvent être envisagées dans le cadre de la présente invention, notamment dans le domaine de la sécurité (par exemple dans les musées, les maisons individuelles, les locaux publics, etc.) ou encore dans le domaine de l'automobile.

### Arrière-plan technologique

Les conditions d'hygiène et de santé s'améliorent dans la plupart des pays, ce qui a notamment pour conséquence un accroissement de l'espérance de vie.

Ainsi, en Europe, l'âge moyen de la population augmente régulièrement. Les projections à l'horizon 2060 révèlent que le pourcentage de personnes ayant plus de 65 ans devrait atteindre plus de 50 % de la population totale, contre à peine 20 % actuellement.

Ce vieillissement général de la population incite les acteurs de la santé à trouver des solutions pour assurer aux personnes âgées leur indépendance le plus longtemps possible, et ce avec un minimum d'assistance.

Parmi les différentes problématiques soulevées par ce vieillissement général, un des enjeux est de mettre en place des systèmes pour détecter les chutes de personnes âgées.

En effet, tous les ans, on recense de trop nombreuses chutes impliquant une hospitalisation car la chute n'a pas été détectée à temps : généralement, la santé de la personne se dégrade lorsque la prise en charge après la chute est trop tardive.

Il existe dans l'état de la technique des systèmes de détection de chute.

Parmi ces systèmes, on retrouve :
- ceux qui doivent être portés en permanence tels que par exemple les patchs « antichute », ou encore
- ceux qui sont intrusifs tels que par exemple les systèmes de télésurveillance avec traitement d'images.

Il existe néanmoins d'autres systèmes pour la détection évitant les inconvénients ci-dessus.

A cet effet, le document WO 2006/130081 propose une méthode de détection de personne au lever du lit. La méthode proposée dans ce document est particulièrement adaptée aux personnes âgées et/ou handicapées.

Plus précisément, des capteurs de pression, introduits dans une mousse de polyuréthane, sont reliés à un système de surveillance qui déclenche une alarme lorsqu'une pression est exercée sur les capteurs.

Néanmoins, cette méthode utilisant des capteurs de pression n'est pas adaptée aux détections de chute. En effet, avec une telle méthode, il est impossible de différencier une personne qui marche d'une personne qui tombe.

Le document WO 2009/050285 propose quant à lui un tapis de sol instrumenté par un système composé de capteurs. Ce système utilise la capacitance en relation avec la déformation d'une couche intermédiaire pour détecter la présence indifféremment d'une personne ou d'un objet.

Néanmoins, les capteurs introduits dans ce tapis ne sont pas adaptés pour détecter spécifiquement les transferts de charges liés à la présence d'une personne ou d'un objet.

Bien qu'intéressantes, les différentes solutions ci-dessus ne permettent pas une détection fine des chutes de personnes. Par ailleurs, l'installation des solutions proposées ci-dessus est très coûteuse, difficile et fastidieuse à mettre en oeuvre.

Alternativement, l'incorporation de capteurs capacitifs dans le sol d'une pièce permet de détecter de manière non-intrusive la présence de personnes à la surface en mesurant la variation d'une grandeur physique.

En effet, une personne au sol est assimilable à une variation locale de la permittivité ou à la présence d'une nouvelle électrode. Dans ce contexte, les capteurs capacitifs sont des capteurs de choix pour la détection de personnes. En effet, les capteurs capacitifs fonctionnent comme des condensateurs et leur capacité varie lorsqu'un objet ou un individu se rapproche : cette variation de la capacité permet de déterminer la présence ou non d'un objet ou d'un individu à proximité du capteur.

Le document FR 2 956 137 utilise de tels capteurs capacitifs et propose un sol instrumenté pour la détection de présence. Dans ce document, le sol comprend :
- une sous-couche constituée dans un matériau électriquement isolant et posée sur une dalle,
- des capteurs capacitifs posés sur la sous-couche, et
- une chape posée sur la sous-couche, cette chape étant isolante et recouvrant les capteurs.

Dans ce document, il est indiqué comme essentiel de disposer d'une sous-couche constituée d'un matériau électriquement isolant pour permettre une détection efficace avec les capteurs capacitifs.

L'installation d'un sol instrumenté selon le document FR 2 956 137 avec une telle sous-couche électriquement isolante est complexe et onéreuse.

Aussi, il s'avère qu'aucun des documents de l'état de la technique ne propose une solution efficace, simple à installer et satisfaisante permettant de détecter la présence ou non d'objet et/ou d'individu sur le sol.

### Objet et résumé de la présente invention

Un des objectifs de la présente invention est d'améliorer la situation actuelle décrite précédemment en remédiant aux inconvénients mentionnés ci-dessus.

A cet effet, l'objet de la présente invention concerne un capteur capacitif pour la détection de présence d'un objet et/ou d'un individu.

Le concept sous-jacent à la présente invention est d'adapter la géométrie du capteur capacitif ; plus précisément, la présente invention prévoit un arrangement spécifique des électrodes constitutives du capteur pour s'adapter au mieux aux propriétés physiques, et notamment aux propriétés diélectriques, de l'objet et/ou de l'individu dont il faut détecter la présence.

Ainsi, selon la présente invention, le capteur capacitif comporte au moins trois électrodes longilignes qui s'étendent sensiblement dans un même plan, et qui sont séparées les unes des autres sur toute ou partie de leur longueur d'une distance de séparation déterminée.

Cette distance de séparation est sensiblement constante.

De préférence, cette distance de séparation est de l'ordre de quelques millimètres.

Avec une telle configuration, il n'est pas nécessaire de mettre une sous-couche électriquement isolante pour détecter correctement la présence d'une personne ou d'un objet.

Selon la présente invention, les électrodes sont polarisées indépendamment les unes des autres ; ceci permet d'avoir des mesures indépendantes, ce qui permet de recueillir des informations différentes d'une électrode à l'autre.

Le fait d'avoir des sensibilités différentes pour chaque électrode, polarisée indépendamment des autres électrodes, permet d'adapter électroniquement la sensibilité du capteur pour détecter de façon précise la présence d'un objet et/ou d'une personne.

L'intérêt d'avoir au moins deux électrodes périphériques entourant une électrode centrale est de limiter la portée du champ électrique généré lorsque l'électrode centrale est polarisée et que les électrodes périphériques qui l'entourent sont à la masse.

La présence d'une électrode à la masse de part et d'autre de l'électrode polarisée permet de limiter la portée du champ électrique approximativement à la distance inter-électrode selon les deux axes du plan sur lequel s'étendent les électrodes.

Ainsi, les phases de mesure consistant à mesurer le signal sur l'électrode centrale lorsqu'une ou plusieurs des électrodes sont polarisées donnent une information sur les évolutions de l'environnement.

En revanche, les phases de mesure consistant à mesurer le signal sur les autres électrodes donnent une information sur les objets et/ou personnes à proximité du capteur.

En combinant les différentes phases de mesure, il est donc possible de séparer les différentes informations et avoir ainsi une estimation précise de la situation.

Dans une variante de réalisation avantageuse de la présente invention, le capteur capacitif comporte au moins trois électrodes dont une électrode centrale présentant un rayon de courbure déterminé et au moins deux électrodes périphériques positionnées de part et d'autre de l'électrode centrale.

Dans cette variante, la distance axiale entre les axes de chaque électrode adjacente les unes des autres est sensiblement comprise entre de l'ordre de 3 à 6 fois ce rayon de courbure, ceci de préférence lorsque celui-ci est compris entre de l'ordre de 0,05 à 1 millimètre.

Ce rapport entre le rayon de courbure de l'électrode centrale et les distances axiales est une des caractéristiques avantageuses de la présente invention : ce rapport permet d'obtenir une détection très fine de la présence ou non des objets et/ou des individus lorsqu'ils sont à proximité du capteur.

Comme évoqué ci-dessus, le rayon de courbure de l'électrode centrale est de préférence compris sensiblement entre de l'ordre de 0,05 à 1 millimètre.

Il a été observé par la demanderesse qu'il n'y a pas d'incidence notable sur le fonctionnement et les performances du capteur lorsque l'électrode centrale a un rayon de courbure sensiblement compris entre de l'ordre 0,05 à 1 millimètre et lorsque les électrodes du capteur sont positionnées les unes par rapport aux autres en respectant un rapport entre la distance axiale et le rayon de courbure compris entre 3 à 6.

Ces rapports et ces distances offrent des performances satisfaisantes qui permettent de résoudre au moins partiellement les différents problèmes énoncés ci-dessus.

Selon l'invention, l'électrode centrale présente une section transversale de forme elliptique (forme ronde écrasée). Cette forme elliptique est donc définie notamment par son rayon de courbure. L'homme du métier comprendra ici que, lorsque l'électrode centrale présente une section transversale formant un disque (forme ronde), le rayon de courbure est assimilable à un rayon.

Avantageusement, au moins une électrode parmi les trois électrodes du capteur capacitif selon la présente invention est mono-filament (c'est-à-dire est formée par un unique fil).

Avantageusement, les trois électrodes du capteur capacitif selon la présente invention sont intégrées dans une gaine protectrice telle que par exemple un câble et forment ainsi une nappe d'électrodes ; ceci permet de favoriser le maintien en position des électrodes entre elles et maintenir ainsi une distance de séparation sensiblement constante entre les électrodes.

Selon une variante de réalisation avantageuse, le capteur capacitif comporte au moins quatre électrodes. En d'autres termes, une électrode a été ajoutée.

Selon la présente invention, cette quatrième électrode est également polarisée indépendamment des autres électrodes.

De préférence, cette électrode ajoutée est monofilament.

L'avantage d'ajouter une telle électrode est de rompre la symétrie du capteur. Ceci augmente le nombre de mesures indépendantes et améliore ainsi la précision de la détection : en effet, plus il y a de mesures indépendantes, moins l'estimation de la reconnaissance de la situation mesurée est complexe.

Dans cette variante, cette électrode, dite déportée, est séparée de chacune des autres électrodes d'une distance d'éloignement qui est sensiblement égale à au moins dix fois la distance de séparation.

L'avantage de cette géométrie dissymétrique par l'ajout d'au moins une électrode déportée des autres électrodes est d'obtenir des portées variables permettant d'utiliser les phases de mesure comme des informations indépendantes.

À titre d'exemple non limitatif, les phases de mesure à courte portée (c'est-à-dire celles consistant à polariser une des quelconques électrodes et à mesurer le signal sur l'électrode centrale de la partie multi-filaments) permettent préférentiellement de suivre les dérives environnementales liées par exemple aux évolutions de la température et de l'hygrométrie ambiante.

Les phases de mesure à moyenne portée (c'est-à-dire celles où l'électrode de mesure est celle à coté de l'électrode déportée) permettent de limiter l'influence du couplage à la terre.

Enfin, les phases de mesure à grande portée (c'est-à-dire celles où l'électrode de mesure est l'une des deux électrodes périphériques) permettent d'évaluer le couplage à la terre et donc d'estimer l'importance de l'objet ou de la personne détectée.

Avantageusement, le capteur capacitif selon la présente invention comporte un boîtier électronique de traitement qui est configuré pour recueillir et traiter le ou les signaux électriques émis par chaque électrode lorsque par exemple un objet et/ou un individu est à proximité du capteur capacitif.

De préférence, le boîtier électronique de traitement est en outre configuré pour déterminer, en fonction des signaux électriques émis par chaque électrode, la présence ou non d'un objet et/ou d'un individu à proximité du capteur capacitif.

De préférence, cette détermination est réalisée en utilisant une base de données expérimentale préétablie comportant les informations relatives aux différents scénarii possibles : par exemple, chute de personne, passage d'un animal domestique, etc.

Le capteur capacitif décrit ci-dessus, de par sa géométrie et sa structure, est particulièrement efficace en termes de détection, puisqu'il permet la génération de signaux électriques précis et indépendants afin de détecter avec une bonne précision les chutes de personnes. De plus, cette structure est particulièrement simple à déployer au sol puisqu'elle ne nécessite pas de couche électriquement isolante.

Corrélativement, l'objet de la présente invention porte sur une structure de sol permettant la détection de présence d'un objet et/ou d'un individu.

Par sol au sens de la présente invention, on entend ici tout système qui présente une structure comprenant notamment une chape, et éventuellement un primaire, une barrière d'étanchéité à l'eau, un enduit, une couche de ragréage, une couche de colle, et/ou une couche de revêtement.

Selon la présente invention, la structure de sol comporte au moins un capteur capacitif tel que décrit ci-dessus.

L'instrumentation du sol avec au moins un capteur capacitif tel que décrit ci-dessus permet d'obtenir un système particulièrement simple à installer, un tel sol étant adapté pour la détection de présence d'un objet et/ou d'un individu.

Grâce à la présente invention, une instrumentation du sol peut être envisagée pour des locaux habités qui sont en cours de rénovation ou des bâtiments en cours de construction.

Selon une variante de réalisation avantageuse, la structure de sol peut présenter une couche de ragréage, qui par exemple est constitué au moins partiellement de mortier à base de liant organique et/ou minéral.

De préférence, dans cette variante, le capteur capacitif est noyé dans une gaine protectrice qui peut être polymérique, et qui elle-même peut être intégrée dans la couche de ragréage.

De préférence, cette gaine protectrice est autoadhésive.

Cette variante est particulièrement intéressante pour la mise en oeuvre de l'invention dans la construction d'un bâtiment ou au moins lors la rénovation des sols. Une telle installation est particulièrement robuste.

Selon une autre variante de réalisation, la structure de sol peut présenter une couche de revêtement.

Par couche de revêtement, on peut comprendre ici par exemple et de manière non limitative une couche telle qu'un parquet, un carrelage, un revêtement souple comme de la moquette tricotée, touffetée, tissée, floquée, en lés ou en dalles, un revêtement de sol aiguilleté, en lés ou en dalles, un revêtement de sol homogène ou hétérogène à base de polychlorure de vinyle, un revêtement de sol à base de polychlorure de vinyle sur support de jute ou de polyester ou sur support de polyester avec envers en polychlorure de vinyle, un revêtement de sol à base de polychlorure de vinyle sur mousse, un revêtement de sol à base de polychlorure de vinyle avec support à base de liège, un revêtement de sol à base de polychlorure de vinyle expansé, une dalle semi flexible à base de polychlorure de vinyle ou encore une dalle d'aggloméré de liège avec couche d'usure à base de polychlorure de vinyle.

Avantageusement, dans cette variante, le capteur capacitif est fixé par collage, directement ou indirectement, sur au moins une portion de la face inférieure de la couche de revêtement.

Alternativement, la structure de sol peut aussi présenter une couche de ragréage fixée à la couche de revêtement par l'intermédiaire d'une couche de colle. Dans ce cas, le capteur capacitif peut être noyé au moins partiellement dans la couche de colle.

Selon une autre variante alternative, la structure de sol peut présenter une couche de revêtement, qui de préférence est constituée au moins partiellement dans un des matériaux cités ci-dessus. Dans ce cas, le capteur capacitif peut être intégré dans la couche de revêtement.

Ainsi, la structure de sol selon la présente invention propose plusieurs alternatives possibles permettant une instrumentation du sol pour la détection de présence d'objet et/ou d'individu.

Grâce à ses différentes caractéristiques structurelles et fonctionnelles, l'objet de la présente invention permet en faisant varier la géométrie des électrodes une détection adaptée à différents scénarii : chute de personne, intrusion de personne dans une pièce ou dans une zone sécurisée, passage d'un animal domestique, etc.

De tels capteurs peuvent aisément instrumenter un sol, sans nécessiter une sous-couche électriquement isolante comme c'est le cas dans l'état de la technique.

### Brève description des figures annexées

D'autres caractéristiques et avantages de la présente invention ressortiront de la description ci-dessous, en référence aux figures la-le à 4a-4b annexées qui en illustrent différents exemples de réalisation dépourvus de tout caractère limitatif et sur lesquelles :
- les figures 1a et 1b représentent respectivement de façon schématique une vue de dessus et une vue en coupe transversale d'un capteur capacitif conforme à un exemple de réalisation avantageux de la présente invention ;
- les figures 1c et 1d représentent chacune de façon schématique une vue en coupe transversale d'un capteur capacitif conforme à deux autres variantes de réalisation de la présente invention ;
- la figure le représente de façon schématique une vue de dessus d'un capteur capacitif conforme à une variante de réalisation avantageux de la présente invention ;
- la figure 2 représente de façon schématique une vue de dessus d'un capteur capacitif conforme à un autre exemple de réalisation avantageux de la présente invention ;
- les figures 3a à 3d représentent chacune une vue schématique en coupe d'une structure de sol conforme à un exemple de réalisation de la présente invention ; et
- les figures 4a et 4b représentent des tableaux de valeurs expérimentales mettant en évidence l'influence de la distance entre les électrodes dans un capteur capacitif selon la présente invention.

### Description détaillée de différents exemples de réalisation avantageux

Plusieurs capteurs capacitifs et structures de sol conformes à différents exemples de réalisation avantageux de la présente invention vont maintenant être décrits en faisant référence conjointement aux figures la-le à 4a-4b.

Les exemples décrits ici sont particulièrement adaptés pour une application du type détection de chute d'une personne âgée dans une enceinte médicalisée du type maison de retraite. Bien évidemment, comme évoqué précédemment, d'autres applications peuvent également être envisagées dans le cadre de la présente invention.

Pour rappel, permettre la détection d'un objet et/ou d'un individu à proximité du sol est un des objectifs de la présente invention.

Concevoir un capteur apte à instrumenter le sol tout en permettant une installation facile du capteur est également un des objectifs de la présente invention.

A cet effet, le concept sous-jacent à la présente invention est d'utiliser la technologie des capteurs capacitifs et d'en faire varier plusieurs paramètres pour que ces capteurs soient adaptés à la fois à leur environnement et à l'un des scénarii que l'on cherche à détecter, à savoir dans l'exemple décrit ici la chute de personnes.

Parmi les différents paramètres que l'on peut faire varier selon la présente invention, on compte notamment : le nombre d'électrodes, leur taille, leur géométrie, ainsi que la disposition relative de ces électrodes les unes par rapport aux autres. En faisant varier ces paramètres, il est notamment possible de s'abstenir de la présence d'une couche électriquement isolante comme proposée dans le document FR 2 956 137.

Compte tenu de l'application visée ici, un « bon » capteur 100 au sens de la présente application est un capteur permettant de détecter la présence ou non d'une personne allongée sur le sol.

Pour ce faire, le capteur 100 selon la présente invention doit donc être sensible à ce qui se trouve au dessus de la couche de revêtement 230 du sol sans être gêné par son environnement.

Il est donc nécessaire ici de concevoir un capteur 100 dont la sensibilité n'est pas nulle au dessus de la couche de revêtement 230. Il est également nécessaire de concevoir un capteur 100 dont la sensibilité est différente en fonction de la phase de mesure.

Ainsi, en récupérant des informations différentes pour un même environnement diélectrique au dessus du revêtement, il est possible de contourner les effets des éléments perturbateurs tels qu'un tapis, un film d'eau, ou des variations d'humidité par exemple.

Pour contrôler le champ de sensibilité du capteur, il faut plusieurs électrodes dont on impose la polarisation afin de pouvoir influencer la répartition du champ électrique dans l'espace. Le capteur 100 développé dans le cadre de la présente invention comporte donc N électrodes que l'on peut polariser indépendamment les unes des autres.

Le fait d'utiliser N électrodes où N est un entier positif supérieur ou égal à 3 permet d'avoir N(N-1)/2 mesures indépendantes.

Dans le premier exemple de réalisation décrit ici et illustré en figure la et 1b, le capteur capacitif 100 selon la présente invention comprend trois électrodes longilignes E1, E2, et E3 : l'électrode E1 est une électrode dite centrale qui est entourée par deux électrodes E2 et E3 dites périphériques.

Dans l'exemple décrit ici, ces trois électrodes E1, E2, et E3 s'étendent longitudinalement dans un plan P (ce plan définit par exemple le sol). Comme illustré sur la figure la, les électrodes E1, E2, et E3 s'étendent de façon rectiligne et sont ainsi sensiblement parallèles entre elles sur toute ou partie de leur longueur : chacune des paires d'électrodes adjacentes E2/E1 et E3/E1 est séparée d'une distance de séparation respectivement d2 et d3 qui est sensiblement constante sur toute ou partie de leur longueur.

L'homme du métier comprendra ici que l'agencement des électrodes E1, E2, et E3 entre elles peut présenter d'autres géométries. A titre d'exemple, comme illustré en figure le, les électrodes E1, E2, et E3 peuvent présenter chacune des zigzags formant ainsi une succession de « S », l'important ici étant d'avoir une distance de séparation sensiblement constante sur toute ou partie de la longueur des électrodes.

Dans l'exemple décrit ici et illustré en figure la, les électrodes E1, E2, et E3 sont prévues pour pouvoir s'installer les unes à côté des autres de manière linéaire ; dans l'exemple décrit ici, les électrodes E1, E2, et E3 présentent toutefois au niveau du boitier électronique 110 des coudes pour simplifier la connectique au boitier électronique 110.

Les électrodes E1, E2, et E3 peuvent également présenter des coudes pour suivre les contours de la géométrie de la pièce (non représenté ici) pourvu que les distances de séparation d2 et d3 entre les électrodes E1, E2, et E3 soient sensiblement égales sur toute leur longueur (excepté bien évidemment au niveau des coudes).

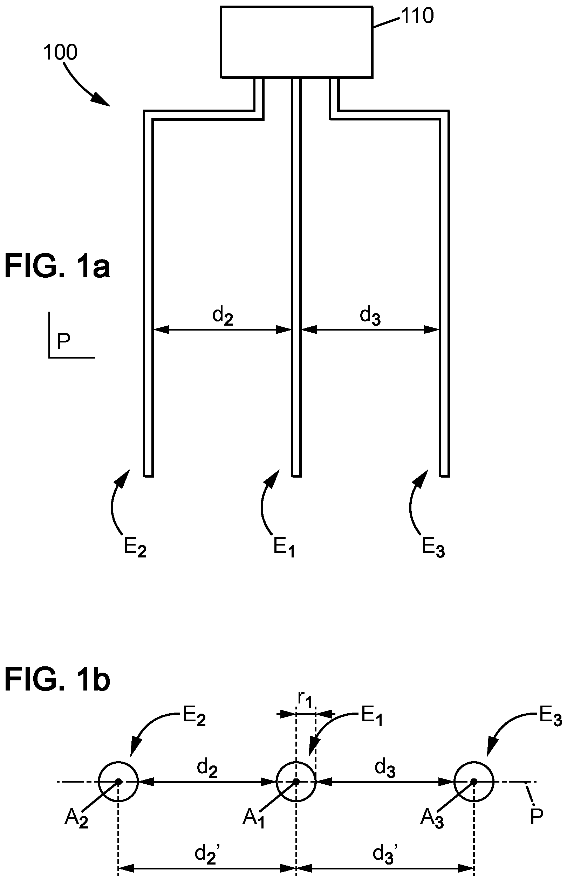

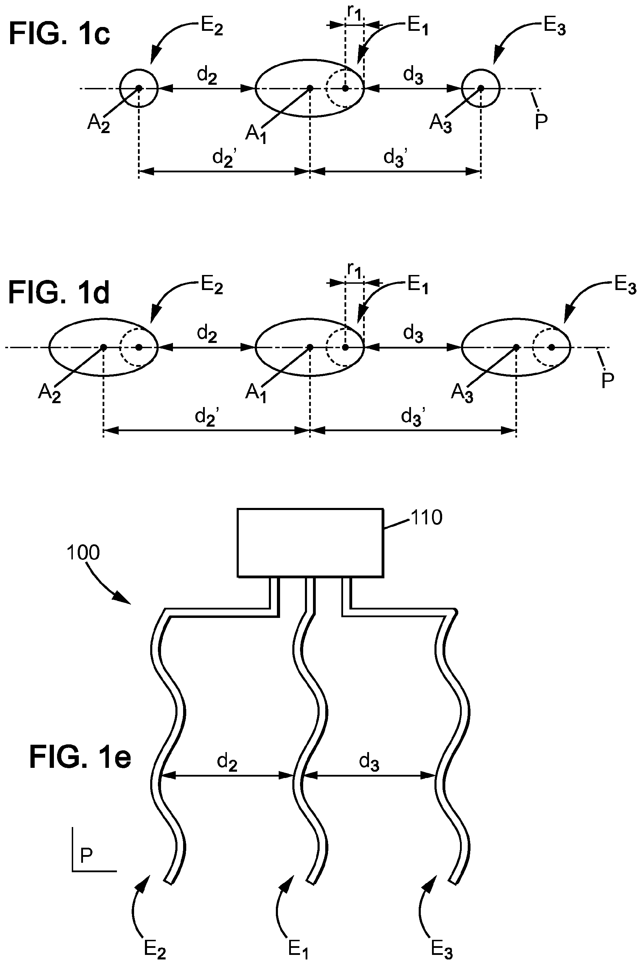

Comme illustré en figure 1b, la géométrie qui a été retenue ici pour obtenir une détection de chutes est de sélectionner une électrode centrale E1 mono-filament dont le r1rayon r1 est sensiblement égal à 0,3 millimètre, et de séparer l'axe A1 de l'électrode E1 avec les axes A2 et A3 respectivement des électrodes E2 et E3 d'une distance axiale d2' et d3' sensiblement égale à 1,27 millimètres.

Dans l'exemple décrit ici, le rapport entre chaque distance axiale d2' et d3' et le rayon de courbure r1 est sensiblement égal à environ 4,2.

Cette géométrie permet d'obtenir des mesures particulièrement satisfaisantes lorsqu'une personne se situe à proximité d'un tel capteur 100.

L'homme du métier comprendra ici que les électrodes peuvent présenter d'autres formes : ainsi, comme illustré sur les figures 1c et 1d, l'électrode centrale E1 et/ou les électrodes périphériques E2 et E3 peuvent avoir une section transversale présentant une forme elliptique (ou une forme « patatoïdale »). Dans ce cas, on parle de « rayon de courbure ». En tout état de cause, les rapports indiqués ci-dessus entre distances axiales et rayon de courbure (ou rayon) demeurent inchangés.

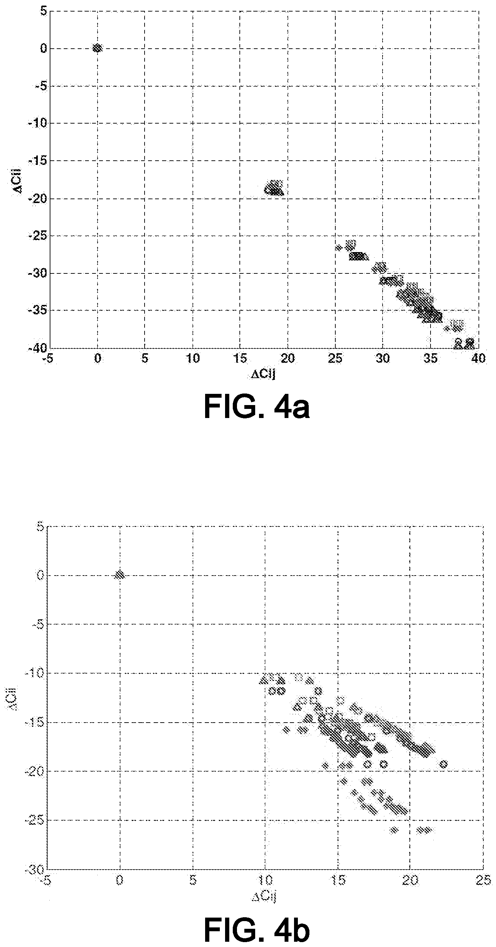

La figure 4b représente les variations des capacités propres en fonction des inter-capacités avec un capteur tel que décrit ci-dessus. Comme illustré sur cette figure, les faisceaux de courbes sont bien différenciés les uns des autres. Ces résultats mettent ainsi en évidence la différence entre les phases de mesure : les mesures obtenues sont indépendantes les unes des autres. Cette différenciation des phases de mesure permet d'envisager la discrimination d'événements informatifs d'évènements perturbateurs.

Ces résultats indiquent donc qu'il est souhaitable de conserver un rapport distance axiale d2' ou d3' et rayon (ou rayon de courbure) r1 compris entre de l'ordre de 3 à 6, pour autant que le rayon (ou rayon de courbure) r1 soit compris entre de l'ordre de 0,05 à 1 millimètres. Le respect de ces proportions entre les distances d2' et d3' et le rayon (ou rayon de courbure) r1 permet d'obtenir des résultats précis et satisfaisants.

La figure 4a représente quant à elle les variations des capacités propres en fonction des inter-capacités avec un capteur ne respectant pas la géométrie proposée ci-dessus (rapports et distances entre les électrodes). Dans cette figure, il n'y a quasiment aucune différence entre les phases de mesure : les différents faisceaux de courbe sont quasiment tous identiques. Cette figure montre ainsi que, lorsque les distances entre les électrodes sont trop grandes, les phases de mesure produisent un signal quasi-similaire ce qui implique une non-indépendance des mesures, soit une impossibilité d'extraire une information pertinente dans les mesures.

La comparaison des phases de mesure des figures 4a et 4b met donc en évidence l'importance de la géométrie proposée dans le cadre de la présente invention.

Ainsi, en respectant la géométrie indiquée ci-dessus, il est possible de mesurer de façon indépendante le champ électrique produit par chaque électrode E1, E2, et E3 lorsqu'une personne est à proximité du capteur 100, ce champ dépendant notamment de la géométrie ci-dessus et de la distribution de la permittivité des matériaux diélectriques dans l'environnement du capteur.

La demanderesse observe que si une électrode E1, E2 ou E3 est trop fine (c'est-à-dire présente un rayon de courbure r1 inférieur à 0,05 millimètre), l'environnement immédiat des électrodes E1, E2 ou E3 a alors une incidence majeure sur le signal électrique, ceci au dépend des effets à plus longue distance. En effet, le champ électrique décroit en *l*/*d* au voisinage d'une électrode.

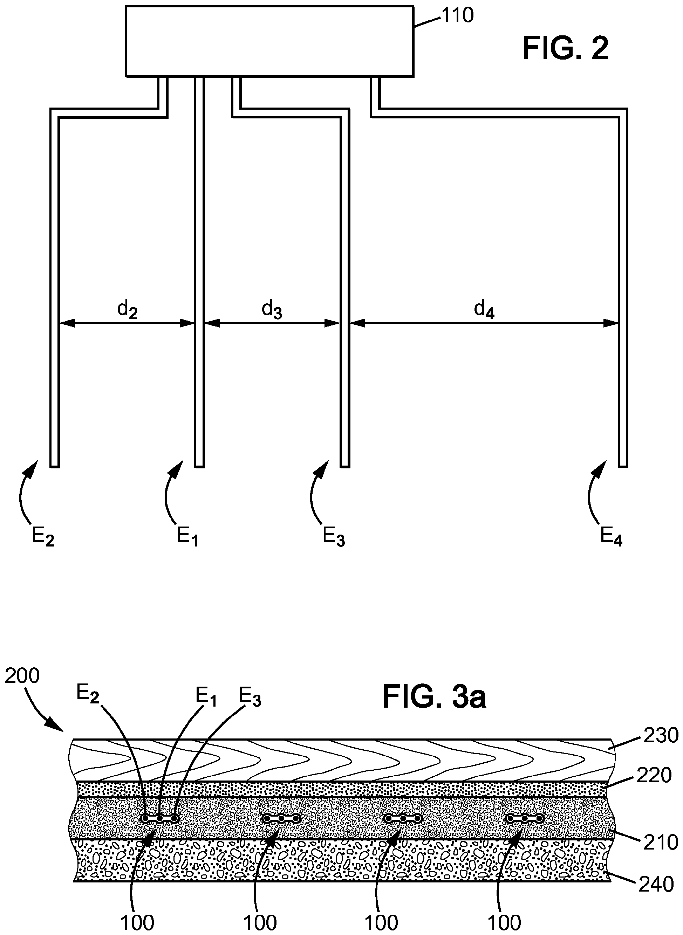

Il est donc raisonnable que, dans le cadre de la présente invention, les électrodes E1, E2 et E3 aient un rayon de courbure présentant une valeur équivalente à la moitié du diamètre moyen des particules de la couche de revêtement dans lequel il est prévu qu'ils soient inclus : une particule de mortier par exemple dans le cas où le capteur 100 est intégré dans une couche de ragréage comme illustré en figure 3a.

Par ailleurs, si la distance axiale d2' et d3' entre les électrodes E1, E2, E3 augmente par rapport au rayon de courbure r1, l'influence des éléments externes, notamment les personnes, ne se différencie plus entre les phases de mesure (voir notamment figure 4a). De ce fait, en utilisant de telles électrodes, on perdrait l'avantage de travailler en multi-électrodes.

Ceci est dû au fait que le couplage entre les électrodes devient négligeable par rapport au couplage entre une électrode et la masse (ou une électrode et une personne). Ainsi, en ne respectant pas cette géométrie et cet arrangement, chaque électrode E1, E2, E3 se comporte de manière similaire (figure 4a). En revanche, lorsque les distances d2 et d3 (ou d2' et d3') entre les électrodes E1, E2, E3 sont suffisamment faibles, le couplage est important : ceci différencie les électrodes ayant un fort couplage (l'électrode centrale E1 par exemple) des électrodes ayant un couplage plus faible (les électrodes périphériques E2 et E3 par exemple). Cette géométrie permet ainsi d'avoir des résultats indépendants (figure 4b).

Dans l'exemple décrit ici en figure la, le capteur capacitif 100 selon la présente invention comporte un boîtier électronique 110 qui est configuré pour recueillir et traiter le ou les signaux électriques indépendants émis par chaque électrode E1, E2 et E3 lorsque par exemple un objet et/ou un individu est à proximité du capteur capacitif 100. Ce boîtier 110 est en outre configuré pour déterminer, en fonction des signaux électriques émis par chaque électrode E1, E2, et E3 et d'une base de données préétablie, la présence ou non d'un objet et/ou un individu à proximité du capteur capacitif 100.

Un deuxième exemple de réalisation avantageux illustré en figure 2 comporte l'ensemble des caractéristiques décrites ci-dessus pour le premier exemple de réalisation et prévoit en outre l'ajout d'une quatrième électrode E4 qui est éloignée de l'électrode E3 d'une distance d'éloignement d4 sensiblement égale à au moins dix fois la distance de séparation d2 ou d3.

Le positionnement spécifique de cette quatrième électrode E4 selon ce deuxième mode de réalisation permet d'avoir des portées variables permettant d'utiliser les phases de mesure comme des informations indépendantes et ainsi s'affranchir par exemple des dérives environnementales.

Cet exemple de capteur 100 présentant une telle géométrie dissymétrique permet d'obtenir une détection capacitive dont les coefficients mesurés sont différenciés sur la hauteur de détection et sensibles à l'environnement de l'objet ou l'individu dont il faut détecter la présence ou non.

Le capteur 100 selon les deux exemples de réalisation décrits ici et illustrés en figures 1a-1b et 2 est donc particulièrement performant. Il peut par ailleurs être aisément intégré dans une structure de sol 200, ceci notamment du fait qu'il ne nécessite pas la présence de couche électriquement isolante.

Différentes structures de sol 200 sont ainsi envisagées dans le cadre de la présente invention, chacune de ces structures comportant au moins un capteur 100 selon le premier exemple de réalisation des figures 1a et 1b (voir notamment figures 3a à 3d). Bien évidemment, il faut comprendre que l'intégration de toute autre type de capteurs 100 selon la présente invention peut être envisagée ici (notamment ceux de la figure 2 : non illustré ici).

Ainsi, l'exemple de réalisation de la figure 3a prévoit l'incorporation de capteurs 100 dans une couche de ragréage 210.

Dans cet exemple, afin d'assurer une mise en oeuvre facile pour le poseur, les capteurs 100 sont noyés dans une gaine, éventuellement polymérique, qui peut être ajourée et auto-adhésive. Cette gaine garantit en outre le maintien en position de la géométrie et de l'espacement entre les électrodes E1, E2 et E3 de chaque capteur 100.

Si les capteurs capacitifs 100 sont introduits dans la couche de ragréage 210, l'instrumentation du sol peut par exemple s'effectuer de la façon suivante : pose de la chape 240, application d'une couche de primaire d'accrochage sur la chape 240, installation des capteurs capacitifs 100 sur la couche de primaire d'accrochage, coulage d'une couche de ragréage 210 sur les capteurs 100, application d'une couche de colle 220 et d'une couche de revêtement 230 sur le ragréage 210 sec instrumenté avec les capteurs 100.

Ainsi, un sol instrumenté présentant une telle structure 200 avec les capteurs capacitifs 100 permet de détecter efficacement des personnes près du sol sans l'obligation de mettre une couche isolante supplémentaire.

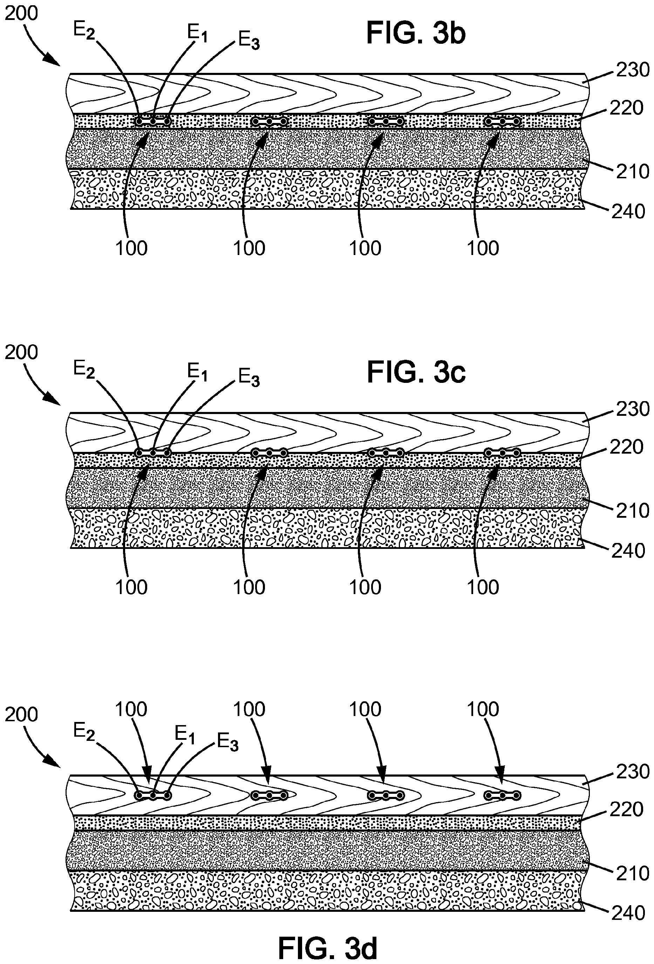

Les exemples de réalisation des figures 3b et 3c prévoient une instrumentation du sol avec des capteurs 100 posés directement ou indirectement sur la couche de ragréage 210.

Dans l'exemple de la figure 3b, l'instrumentation du sol est effectuée de la façon suivante : les capteurs capacitifs 100 sont ajoutés entre des bandes auto-adhésives formant une couche de colle 220 posée sur la couche de ragréage 210.

L'exemple de la figure 3c diffère de l'exemple de la figure 3b en ce que les capteurs capacitifs 100 sont fixés par collage directement sur une portion de la face inférieure de la couche de revêtement 230.

Enfin, selon un quatrième exemple de réalisation illustré en figure 3d, les capteurs 100 sont directement introduits dans la couche de revêtement 230. Dans cet exemple, on reprend les précédentes étapes de l'installation, en ayant préalablement fabriqué une couche de revêtement 230 instrumenté par exemple par tissage des capteurs 100 avec la couche de revêtement 230.

Ainsi, la géométrie des électrodes E1, E2 et E3 telle que prévue dans la cadre de la présente invention est particulièrement avantageuse et permet la conception d'un capteur capacitif 100 garantissant une détection de présence fine et précise des personnes et/ou des objets qui sont situés proximité dudit capteur.

Les capteurs 100 ainsi obtenus peuvent aisément servir à instrumenter un sol pour une application par exemple dans des bâtiments médicalisés et/ou des maisons de retraite, la structure de sol 200 ne nécessitant pas ici la présence d'une couche électriquement isolante comme c'est le cas dans l'état de la technique.

Il devra être observé que cette description détaillée porte sur des exemples de réalisation particuliers de la présente invention, mais qu'en aucun cas cette description ne revêt un quelconque caractère limitatif à l'objet de l'invention ; bien au contraire, elle a pour objectif d'ôter toute éventuelle imprécision ou toute mauvaise interprétation des revendications qui suivent.

## Revendications

1. Capteur capacitif (100) pour la détection d'un objet et/ou d'un individu comportant au moins trois électrodes (E1, E2, E3) longilignes s'étendant sensiblement dans un même plan (P) et séparées les unes des autres sur toute ou partie de leur longueur d'une distance de séparation déterminée (d2, d3) sensiblement constante,
dans lequel la polarisation de chacune desdites au moins trois électrodes (E1, E2, E3) est imposée indépendamment des autres électrodes.

2. Capteur capacitif (100) selon la revendication 1 comportant une électrode centrale (E1) présentant un rayon de courbure déterminé (r1) et au moins deux électrodes périphériques (E2, E3) positionnées de part et d'autre de l'électrode centrale (E1), **caractérisé en ce que** la distance axiale (d2', d3') entre les axes de chaque électrode (E1, E2, E3) adjacente les unes des autres est sensiblement comprise entre de l'ordre de 3 à 6 fois la valeur du rayon de courbure (r1).

3. Capteur capacitif (100) selon la revendication 1 ou 2, **caractérisé en ce qu'**au moins une électrode (E1, E2, E3) parmi lesdites au moins trois électrodes (E1, E2, E3) est mono-filament.

4. Capteur capacitif (100) selon l'une quelconque des revendications précédentes, **caractérisé en ce que** lesdites au moins trois électrodes (E1, E2, E3) sont intégrées dans une gaine protectrice configurée pour que lesdites électrodes soient maintenues en position.

5. Capteur capacitif (100) selon l'une quelconque des revendications précédentes comportant au moins quatre électrodes (E1, E2, E3, E4), **caractérisé en ce qu'**une (E4) desdites au moins quatre électrodes (E1, E2, E3, E4) est séparée de chacune des autres électrodes (E1, E2, E3) d'une distance d'éloignement (d4) égale à au moins dix fois la distance de séparation (d2, d3).

6. Capteur capacitif (100) selon l'une quelconque des revendications précédentes, **caractérisé en ce qu'**il comporte un boîtier électronique de traitement (110) configuré pour recueillir et traiter le ou les signaux électriques émis par chaque électrode (E1, E2, E3, E4) lorsque par exemple un objet et/ou un individu est à proximité dudit capteur capacitif (100).

7. Capteur capacitif (100) selon la revendication 6, **caractérisé en ce que** le boîtier électronique de traitement (110) est configuré pour déterminer, en fonction des signaux électriques émis par chaque électrode (E1, E2, E3, E4), la présence ou non d'un objet et/ou d'un individu à proximité dudit capteur capacitif (100).

8. Structure de sol (200) pour la détection d'un objet et/ou d'un individu, **caractérisée en ce qu'**elle comporte au moins un capteur capacitif (100) selon l'une quelconque des revendications 1 à 7.

9. Structure de sol (200) selon la revendication 8 présentant une couche de ragréage (210), **caractérisée en ce que** ledit au moins un capteur capacitif (100) est noyé dans une gaine protectrice, de préférence autoadhésive, elle-même intégrée dans la couche de ragréage (210), et **en ce que** cette gaine protectrice est polymérique.

10. Structure de sol (200) selon la revendication 8 présentant une couche de revêtement (230), **caractérisée en ce que** ledit au moins un capteur capacitif (100) est fixé par collage, directement ou indirectement, sur au moins une portion de la face inférieure de la couche de revêtement (230).

11. Structure de sol (200) selon la revendication 10 présentant une couche de ragréage (210), **caractérisée en ce que** la couche de revêtement (230) est fixée à la couche de ragréage (210) par l'intermédiaire d'une couche de colle (220), et **en ce que** ledit au moins un capteur capacitif (100) est noyé au moins partiellement dans la couche de colle (220).

12. Structure de sol (200) selon la revendication 8 présentant une couche de revêtement (230), **caractérisée en ce que** ledit au moins un capteur capacitif (100) est intégré dans la couche de revêtement (230).

## Patentansprüche

1. Kapazitiver Sensor (100) zum Detektieren eines Gegenstands und/oder eines Individuums, aufweisend mindestens drei längliche Elektroden (E1, E2, E3), die sich im Wesentlichen in einer gleichen Ebene (P) erstrecken und über die gesamte oder einen Teil ihrer Länge in einem vorgegebenen, im Wesentlichen konstanten Separationsabstand (d2, d3) voneinander separiert sind, wobei die Polarisation jeder der mindestens drei Elektroden (E1, E2, E3) unabhängig von den anderen Elektroden auferlegt ist.

2. Kapazitiver Sensor (100) nach Anspruch 1, aufweisend eine zentrale Elektrode (E1), die einen vorgegebenen Krümmungsradius (r1) hat, und mindestens zwei periphere Elektroden (E2, E3), die beiderseits der zentralen Elektrode (E1) angeordnet sind, **dadurch gekennzeichnet, dass** der Achsenabstand (d2', d3') zwischen jeweiligen Achsen benachbarter Elektroden (E1, E2, E3) im Wesentlichen zwischen ungefähr drei bis sechs Mal der Wert des Krümmungsradius (r1) ist.

3. Kapazitiver Sensor (100) nach Anspruch 1 oder 2, **dadurch gekennzeichnet, dass** mindestens eine Elektrode (E1, E2, E3) der mindestens drei Elektroden (E1, E2, E3) Monofilament ist.

4. Kapazitiver Sensor (100) nach einem der vorstehenden Ansprüche, **dadurch gekennzeichnet, dass** die mindestens drei Elektroden (E1, E2, E3) in einem Schutzmantel integriert sind, der derart konfiguriert, dass die Elektroden in Position gehalten werden.

5. Kapazitiver Sensor (100) nach einem der vorstehenden Ansprüche, aufweisend mindestens vier Elektroden (E1, E2, E3, E4), **dadurch gekennzeichnet, dass** eine (E4) der mindestens vier Elektroden (E1, E2, E3, E4) von jeder der anderen Elektroden (E1, E2, E3) in einem Entfernungsabstand (d4) separiert ist, der gleich mindestens 10 Mal der Separationsabstand (d2, d3) ist.

6. Kapazitiver Sensor (100) nach einem der vorstehenden Ansprüche, **dadurch gekennzeichnet, dass** er eine elektronische Verarbeitungsbox (110) aufweist, die konfiguriert ist, das oder die elektrischen Signale zu empfangen und zu verarbeiten, die von jeder Elektrode (E1, E2, E3, E4) ausgegeben werden, wenn zum Beispiel ein Gegenstand und/oder ein Individuum in der Nähe des kapazitiven Sensors (100) ist.

7. Kapazitiver Sensor (100) nach Anspruch 6, **dadurch gekennzeichnet, dass** die elektronische Verarbeitungsbox (110) konfiguriert ist, um die Anwesenheit oder Nichtanwesenheit eines Gegenstands und/oder eines Individuums in der Nähe des kapazitiven Sensors (100) als Funktion der von jeder Elektrode (E1, E2, E3, E4) ausgegebenen Signale zu bestimmen.

8. Bodenstruktur (200) zum Detektieren eines Gegenstands und/oder eines Individuums, **dadurch gekennzeichnet, dass** sie mindestens einen kapazitiven Sensor (100) nach einem der Ansprüche 1 bis 7 aufweist.

9. Bodenstruktur (200) nach Anspruch 8, aufweisend eine Putzschicht (210), **dadurch gekennzeichnet, dass** der mindestens eine kapazitive Sensor (100) in eine vorzugsweise selbsthaftende Schutzhülle eingebettet ist, die ihrerseits in der Putzschicht (210) integriert ist, und dadurch, dass diese Schutzhülle aus Kunststoff ist.

10. Bodenstruktur (200) nach Anspruch 8, aufweisend eine Verkleidungsschicht (230), **dadurch gekennzeichnet, dass** der mindestens eine kapazitive Sensor (100) mittels Klebung direkt oder indirekt an mindestens einem Teil der unteren Fläche der Verkleidungsschicht (230) angebracht ist.

11. Bodenstruktur (200) nach Anspruch 10, aufweisend eine Putzschicht (210), **dadurch gekennzeichnet, dass** die Verkleidungsschicht (230) über eine Klebstoffschicht (220) an der Putzschicht (210) angebracht ist, und dadurch, dass der mindestens eine kapazitive Sensor (100) mindestens teilweise in der Klebstoffschicht (220) eingebettet ist.

12. Bodenstruktur (200) nach Anspruch 8, aufweisend eine Verkleidungsschicht (230), **dadurch gekennzeichnet, dass** der mindestens eine kapazitive Sensor (100) in der Verkleidungsschicht (230) integriert ist.

## Claims

1. Capacitive sensor (100) for detecting an object and/or individual, comprising at least three slender electrodes (E1, E2, E3) extending substantially in the same plane (P) and separated from one another over all or part of their length by a substantially constant given separation distance (d2, d3), in which the polarization of each electrode among said at least three electrodes (E1, E2, E3) is imposed independently of the other electrodes.

2. Capacitive sensor (100) according to claim 1, comprising a central electrode (E1) having a given radius of curvature (r1) and at least two peripheral electrodes (E2, E3) positioned on either side of the central electrode (E1), **characterised in that** the axial distance (d2', d3') between the axes of each electrode (E1, E2, E3) adjacent to one another is substantially between around 3 to 6 times the value of the radius of curvature (r1).

3. Capacitive sensor (100) according to claim 1 or 2, **characterised in that** at least one electrode (E1, E2, E3) from said at least three electrodes (E1, E2, E3) is of the single filament type.

4. Capacitive sensor (100) according to any one of the preceding claims, **characterised in that** said at least three electrodes (E1, E2, E3) are integrated in a protective sheath configured so that said electrodes are held in position.

5. Capacitive sensor (100) according to any one of the preceding claims, comprising at least four electrodes (E1, E2, E3, E4), **characterised in that** one (E4) of said at least four electrodes (E1, E2, E3, E4) is separated from each of the other electrodes (E1, E2, E3) by a spacing distance (d4) equal to at least ten times the separation distance (d2, d3).

6. Capacitive sensor (100) according to any one of the preceding claims, **characterised in that** it comprises an electronic processing box (110) configured so as to collect and process the electrical signal or signals emitted by each electrode (E1, E2, E3, E4) when for example an object and/or individual is close to said capacitive sensor (100).

7. Capacitive sensor (100) according to claim 6, **characterised in that** the electronic processing box (110) is configured so as to determine, according to the electrical signals emitted by each electrode (E1, E2, E3, E4), the presence or not of an object and/or individual close to said capacitive sensor (100).

8. Floor structure (200) for detecting an object and/or individual, **characterised in that** it comprises at least one capacitive sensor (100) according to any one of claims 1 to 7.

9. Floor structure (200) according to claim 8, having a finishing layer (210), **characterised in that** said at least one capacitive sensor (100) is embedded in a protective sheath, preferably self-adhesive, itself integrated in the finishing layer (210), and **in that** this protective sheath is polymeric.

10. Floor structure (200) according to claim 8, having a covering layer (230), **characterised in that** said at least one capacitive sensor (100) is fixed by adhesive bonding, directly or indirectly, to at least a portion of the bottom face of the covering layer (230).

11. Floor structure according to claim 10, having a finishing layer (210), **characterised in that** the covering layer (230) is fixed to the finishing layer (210) by means of a layer of adhesive (220), and **in that** said at least one capacitive sensor (100) is at least partially embedded in the layer of adhesive (220).

12. Floor structure (200) according to claim 8, having a covering layer (230), **characterised in that** said at least one capacitive sensor (100) is integrated in the covering layer (230).
